# EUROPÄISCHE PATENTANMELDUNG

(11) **EP 4 592 716 A1**
(43) Veröffentlichungstag der Anmeldung: **30.07.2025**
(21) Anmeldenummer: 25150656.4
(22) Anmeldetag: 08.01.2025
(51) Int. Cl.: G01V 8/20, F16P 3/14

(54) **LICHTVORHANG**

(30) Priorität: 22.01.2024 DE 202024100304 U
(71) Anmelder: Leuze electronic GmbH + Co. KG, 73277 Owen/Teck (DE)
(72) Erfinder: Olbrich, Sebastian, 80992 München (DE); Sudiyan, Stanislav, 81249 München (DE); Feller, Bernhard, 86316 Friedberg (DE)
(74) Vertreter: Ruckh, Rainer Gerhard

(57) **Zusammenfassung**

Die Erfindung betrifft ein Lichtvorhang (1) zur Erfassung von Objekten in einem Überwachungsbereich, mit einer Anordnung von Lichtstrahlen (3) emittierenden Sendern (4), mit einer Anordnung von Lichtstrahlen (3) empfangenden Empfängern (6, 6'), und mit einer Auswerteeinheit (8), in welcher in Abhängigkeit von Empfangssignalen der Empfänger (6, 6') ein Objektfeststellungssignal generiert wird. Die Empfänger (6, 6') bilden wenigstens eine Kaskade aus und werden mittels eines Multiplexers (11, 11') einzeln nacheinander einem Verstärker (12, 12') zugeschaltet, wobei bei einer Aktivierung einer Zuschaltung eines Empfängers (6) der Verstärker (12, 12') deaktiviert ist.

## Beschreibung

Die Erfindung betrifft einen Lichtvorhang.

Ein derartiger Lichtvorhang ist beispielsweise aus der DE 10 2008 050 943 A1 vorbekannt. Der Lichtvorhang dient zur Überwachung von Objekten in einem Überwachungsbereich. Insbesondere ist der Lichtvorhang als Sicherheits-Lichtvorhang ausgebildet, der im Bereich der Sicherheitstechnik zur Überwachung von Gefahrenbereichen eingesetzt wird. Der Lichtvorhang umfasst eine Anordnung von Sendern die im Gehäuse einer Sendereinheit untergebracht sind. Weiterhin ist eine Anordnung von Empfängern vorgesehen, die in einem Gehäuse einer Empfängereinheit untergebracht sind. Die Sender- und Empfängereinheiten sind an gegenüberliegenden Rändern des Überwachungsbereichs angeordnet. Bei freiem Überwachungsbereich sind die von einem Sender emittierten Lichtstrahlen auf einen zugeordneten Empfänger geführt. Der Sender und der zugeordnete Empfänger bilden eine Strahlachse. Zur Objektdetektion werden in der Auswerteeinheit die Empfangssignale der Empfänger ausgewertet und in Abhängigkeit hiervon als Objektfeststellungssignal ein binäres Schaltsignal generiert, dessen Schaltzustände angeben, ob sich ein Objekt im Überwachungsbereich befindet oder nicht. Ein Objekteingriff liegt vor, wenn wenigstens eine Strahlachse durch ein Objekt unterbrochen ist.

Der Betrieb des Lichtvorhangs erfolgt derart, dass die Strahlachsen, d.h. die Sender und Empfänger der einzelnen Strahlachsen, zyklisch einzeln nacheinander aktiviert werden. Bei dem in der DE 10 2008 050 943 A1 beschriebenen Lichtvorhang werden die einzelnen Sender über Schieberegister einzeln aktiviert. Ebenso werden die Empfänger über Schieberegister einzeln aktiviert. Die Synchronisierung der Sender- und Empfängeraktivierung erfolgt auf optischem Weg. Hierzu werden die Lichtstrahlen einer ausgewählten Strahlachse verwendet.

Zur Erhöhung der Nachweisempfindlichkeit des Lichtvorhangs werden die Empfangssignale verstärkt, bevor sie der Auswerteeinheit zugeführt werden.

Dabei ist es bekannt, einen oder mehrere Verstärker in einem Multiplexbetrieb derart zu betreiben, dass nacheinander mehrere Empfänger dem jeweiligen Verstärker zugeschaltet werden, so dass dessen Empfangssignale im Verstärker verstärkt werden.

Der Vorteil hierbei besteht darin, dass nicht für jeden Empfänger ein separater Verstärker vorgesehen werden muss, so dass nur wenig Bauteile empfangsseitig vorgesehen werden müssen.

Ein Nachteil bei derartigen Anordnungen besteht darin, dass mit einem Multiplexer durchgeführte Umschaltvorgänge, mit denen jeweils ein anderer Empfänger dem Verstärker zugeschaltet wird, zu Einschwingvorgängen in den verstärkten Empfangssignalen führen, d.h. die verstärkten Empfangssignale sind verfälscht. Daher ist nach jedem Umschaltvorgang eine Wartezeit erforderlich, bis die Einschwingvorgänge abgeklungen sind. Dies führt jedoch zu einer unerwünschten Erhöhung der Reaktionszeit des Lichtvorhangs bei der Objekterfassung.

Der Erfindung liegt die Aufgabe zugrunde, einen Lichtvorhang der eingangs genannten Art bereitzustellen, der einen konstruktiv einfachen Aufbau aufweist und mit welchem bei kurzen Reaktionszeiten eine sichere Objektdetektion durchführbar ist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen Lichtvorhang zur Erfassung von Objekten in einem Überwachungsbereich, mit einer Anordnung von Lichtstrahlen emittierenden Sendern, mit einer Anordnung von Lichtstrahlen empfangenden Empfängern und mit einer Auswerteeinheit, in welcher in Abhängigkeit von Empfangssignalen der Empfänger ein Objektfeststellungssignal generiert wird. Die Empfänger bilden wenigstens eine Kaskade aus. Die Empfänger werden mittels eines Multiplexers einzeln nacheinander einem Verstärker zugeschaltet, wobei bei einer Aktivierung einer Zuschaltung eines Empfängers der Verstärker deaktiviert ist.

Gemäß einer ersten Variante weist der Lichtvorhang eine Anordnung von Sendern auf, die vorteilhaft in einem Gehäuse einer Sendereinheit integriert sind. Weiterhin weist der Lichtvorhang vorteilhaft eine in einem weiteren Gehäuse integrierte Empfängereinheit auf, in der eine Anordnung von Empfängern angeordnet sind. Die Sendereinheit und die Empfängereinheit sind an gegenüberliegenden Rändern des Überwachungsbereichs angeordnet. Jedem Sender ist vorteilhaft ein Empfänger zur Ausbildung einer Strahlachse so zugeordnet, dass bei freiem Überwachungsbereich die Lichtstrahlen eines Senders ungehindert zu dem zugeordneten Empfänger der jeweiligen Strahlachse geführt sind. Ein Objekt im Überwachungsbereich wird dadurch erkannt, dass zumindest die Lichtstrahlen einer Strahlachse unterbrochen werden.

Gemäß einer zweiten Variante sind sowohl im ersten als auch im zweiten Gehäuse als Sensorkomponenten Sender und Empfänger vorhanden.

Insbesondere ist in jedem Gehäuse eine alternierende Reihenanordnung von Sendern und Empfängern vorhanden.

Auch in diesem Fall sind die Sender und Empfänger so angeordnet, dass bei freiem Überwachungsbereich die Lichtstrahlen jedes Senders ungehindert den Überwachungsbereich passieren und auf einen zugeordneten Empfänger treffen. Auch in diesem Fall wird ein Objekt im Überwachungsbereich dadurch erkannt, dass zumindest die Lichtstrahlen einer Strahlachse unterbrochen werden.

Mit dem Lichtvorhang wird generell bei der Erfassung eines Objekts ein Obj ektfeststellungssignal generiert.

Gemäß einer ersten Variante ist das Objektfeststellungssignal ein binäres Schaltsignal, dessen Schaltzustände angeben, ob ein Objekt im Überwachungsbereich vorhanden ist oder nicht.

Gemäß einer zweiten Variante enthält das Objektfeststellungssignal eine geometrische Kenngröße eines erfassten Objekts.

Die geometrische Kenngröße kann die Objektgröße oder Objektkontur eines Objekts sein.

Gemäß einer vorteilhaften Ausgestaltung ist der Lichtvorhang ein Sicherheitssensor. Der Lichtvorhang weist dann einen fehlersicheren Aufbau auf und kann so in sicherheitstechnischen Applikationen eingesetzt werden. Der fehlersichere Aufbau kann insbesondere durch eine mehrkanalige Auswerteeinheit realisiert werden.

Der erfindungsgemäße Lichtvorhang weist empfangsseitig wenigstens einen im Multiplexbetrieb betriebenen Verstärker auf, mit welchem zeitlich nacheinander Empfangssignale unterschiedlicher Empfänger verstärkt werden. Hierzu ist empfangsseitig jedem Verstärker ein Multiplexer zugeordnet.

Dadurch, dass nicht jedem Empfänger ein Verstärker zugeordnet sein muss, sondem dass der oder jeder Verstärker die Verstärkung von Empfangssignalen mehrerer Empfänger übernimmt, ergibt sich eine erhebliche Einsparung an Bauteilen, was den konstruktiven Aufwand des Lichtvorhangs reduziert.

Im einfachsten Fall weist der erfindungsgemäße Lichtvorhang nur eine Kaskade mit Empfängern auf, wobei diesen nur ein Multiplexer und ein Verstärker zugeordnet sind.

Weiterhin können bei dem erfindungsgemäßen Lichtvorhang mehrere Kaskaden von Empfängern vorhanden sein, wobei die Empfänger jeder Kaskade mittels eines Multiplexers einem Verstärker zugeschaltet werden.

In jedem Fall werden mit einem Multiplexer die Empfänger der j eweiligen Kaskade einzeln nacheinander dem jeweiligen Verstärker zugeschaltet.

Erfindungsgemäß wird bei einer Aktivierung einer Zuschaltung eines Empfängers zum Verstärker dieser Verstärker deaktiviert.

Besonders vorteilhaft ist auch bei einer Deaktivierung einer Zuschaltung eines Empfängers der Verstärker deaktiviert.

Damit wird auf einfache Weise verhindert, dass Umschaltvorgänge des Multiplexers, die zum Aufschalten einzelner Empfänger auf den zugeordneten Verstärker dienen, die im Verstärker verstärkten Empfangssignale nicht oder nicht nennenswert beeinflussen bzw. beeinträchtigen.

Da der Verstärker bei der mittels eines Multiplexers durchgeführten Aktivierung und vorteilhaft auch bei der Deaktivierung der Zuschaltung eines Empfängers zum Empfänger deaktiviert ist, bleibt dieser Verstärker von diesen Umschaltvorgängen unbeeinflusst. Der Verstärker ist nur dann aktiviert, wenn diese Umschaltvorgänge vorbei sind.

Dadurch ist auf einfache Weise sichergestellt, dass die im Verstärker verstärkten Empfangssignale nicht durch Umschaltstörungen beeinträchtigt werden, wodurch eine sichere und fehlerfreie Objektdetektion gewährleistet ist.

Ein weiterer Vorteil besteht in einer sehr kurzen Reaktionszeit bei der Generierung des Objektfeststellungssignals. Da der bzw. jeder Verstärker bei Umschaltvorgängen des zugeordneten Multiplexers deaktiviert ist, werden durch den Multiplexer verursachte Umschaltstörungen nicht auf den Verstärker übertragen.

Damit entfallen Wartezeiten bei der Verstärkung der Empfangssignale, die ansonsten notwendig wären, um im Empfangssignal vorhandene Umschaltstörungen abklingen zu lassen.

Gemäß einer vorteilhaften Ausführungsform ist im Lichtvorhang eine Kaskadensteuerung vorhanden, mittels derer die oder alle Multiplexer gesteuert werden.

Die Kaskadensteuerung kann beispielsweise von einem Controller gebildet sein.

Dadurch, dass die Kaskadensteuerung alle Multiplexer und damit das Zeitverhalten der Aktivierung aller Empfänger zentral steuert, kann das Timing der Empfängeraktivierung auf einfache Weise optimiert und kontrolliert werden.

Besonders vorteilhaft ist die Kaskadensteuerung Bestandteil einer Rechnerbaugruppe, welche die Auswerteeinheit enthält.

Die Rechnerbaugruppe weist dadurch einen kompakten, effizienten Aufbau auf, da die Auswerteeinheit der Kaskadensteuerung unmittelbar zugeordnet ist.

Im einfachsten Fall ist die Auswerteeinheit einkanalig ausgebildet und besteht vorteilhaft aus nur einer CPU.

Vorteilhaft besteht die Auswerteeinheit aus zwei sich gegenseitig überwachenden CPUs. Damit weist die Auswerteeinheit einen redundanten, mehrkanaligen Aufbau auf, so dass der Lichtvorhang einen Sicherheitssensor ausbilden kann.

Gemäß vorteilhaften Ausgestaltungen weist jeder Multiplexer eine Schiebekette oder ein Adressierwerk auf.

Das Adressierwerk weist generell Adressen zur Adressierung der Empfänger und Verstärker auf. Die Schiebekette weist eine Reihenanordnung von Schieberegisterelementen auf, wobei vorteilhaft jeweils einem Schieberregisterelement ein Empfänger oder Verstärker zu dessen Adressierung innerhalb der Schiebekette zugeordnet ist.

Das Adressierwerk kann in einer Rechnereinheit realisiert sein. Die Schiebekette kann aus einer Reihenanordnung von FlipFlops bestehen, wobei die FlipFlops die Schieberegisterelemente der Schiebekette ausbilden.

Vorteilhaft wird die Aktivierung und Deaktivierung von Empfängern und/oder Verstärkern aus der Schiebekette oder dem Adressierwerk abgeleitet.

Alternativ wird die Aktivierung und Deaktivierung von Empfängern und/oder Verstärkern mittels der Kaskadensteuerung durchgeführt.

Die Funktionalität der Multiplexer kann dadurch noch erweitert sein, dass mittels der Schiebekette oder mittels des Adressierwerks Anzeigemittel aktiviert werden.

Die Adressen des Adressierwerks oder Schieberegisterelemente der Schiebekette sind dann dahingehend erweitert, dass mit diesen auch Anzeigemittel adressiert und dadurch aktiviert werden können.

Die Anzeigemittel können von Leuchtdioden oder alphanumerischen Anzeigen gebildet sein, an welchen Statusmeldungen oder dergleichen angezeigt werden, insbesondere auch ortsaufgelöst für die einzelnen Kaskaden.

Gemäß einer weiteren vorteilhaften Ausgestaltung wird mittels der Schiebekette oder mittels des Adressierwerks der zugeordnete Verstärker getestet.

Insbesondere werden zur Testung in der Schiebekette oder im Adressierwerk Testpulse generiert, dem Verstärker zugeführt und von diesem rückgelesen. In der Schiebekette oder in dem Adressierwerk werden rückgelesene Testpulse mit einer Erwartungshaltung verglichen.

Als Erwartungshaltung können Sollwerte vorgegeben werden, die einem fehlerfreien Zustand entsprechen. Weichen die rückgelesenen Testpulse von den Sollwerten ab, kann eine Fehlermeldung generiert werden. Alternativ kann eine Sicherheitsfunktion ausgelöst werden. Insbesondere kann der Lichtvorhang stillgesetzt werden.

Für den Fall, dass der Lichtvorhang mehrere Kaskaden von Empfängern aufweist, ist jedem Verstärker ein Verstärker-Adressierwerk zugeordnet, welches vom zugeordneten Multiplexer angesteuert ist.

Durch die Verstärker-Adressierwerke erfolgt eine Auswahl der Verstärker der einzelnen Kaskaden.

Gemäß einer vorteilhaften Weiterbildung können die Verstärker-Adressierwerke auch zur Testung der Verstärker der einzelnen Kaskaden eingesetzt werden.

Besonders vorteilhaft wird jedes Verstärker-Adressierwerk zur Aktivierung oder Deaktivierung des zugeordneten Verstärkers von der Kaskadensteuerung angesteuert.

Dann kann zentral über die Kaskadensteuerung das Timing der Aktivierungen der einzelnen vorgegeben und kontrolliert werden.

Die Erfindung wird im Folgenden anhand der Zeichnungen erläutert. Es zeigen:
- Figur 1:: Schematische Darstellung eines ersten Ausführungsbeispiels des erfindungsgemäßen Lichtvorhangs.
- Figur 2:: Schematische Darstellung eines zweiten Ausführungsbeispiels des erfindungsgemäßen Lichtvorhangs.
- Figur 3:: Erstes Beispiel einer empfangsseitigen Schaltungsanordnung für den Lichtvorhang gemäß Figur 1.
- Figur 4:: Zuordnung einer Auswerteeinheit zu der Kaskadensteuerung gemäß Figur 3.
- Figur 5:: Zeitdiagramme für die Schaltungsanordnung gemäß Figur 3.
- Figur 6:: Zweites Beispiel einer empfangsseitigen Schaltungsanordnung für den Lichtvorhang gemäß Figur 1.
- Figur 7:: Drittes Beispiel einer empfangsseitigen Schaltungsanordnung für den Lichtvorhang gemäß Figur 1.

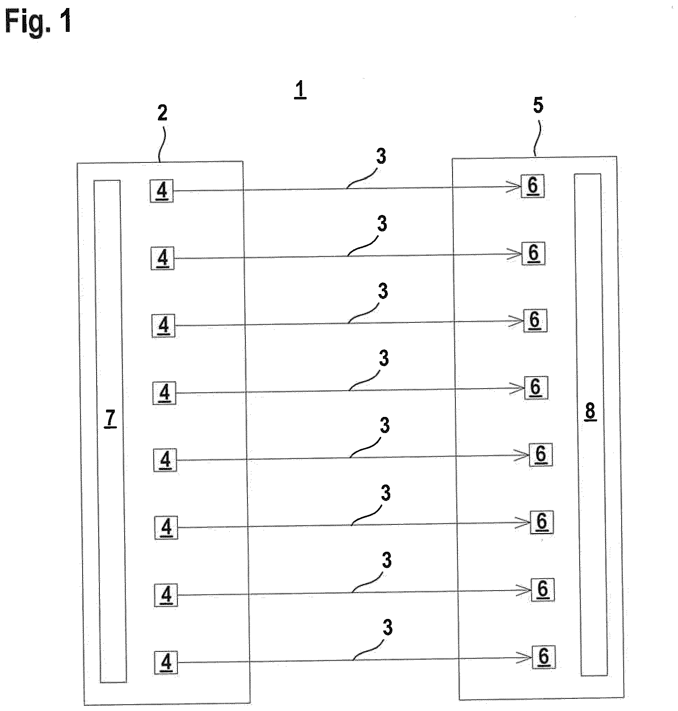

Figur 1 zeigt schematisch ein erstes Beispiel des erfindungsgemäßen Lichtvorhangs 1. Der Lichtvorhang 1 umfasst eine Sendereinheit 2, in deren Gehäuse eine Reihenanordnung von Lichtstrahlen 3 emittierenden Sendern 4 in Form von Sendedioden angeordnet ist. Die Sendedioden sind von Leuchtdioden oder dergleichen gebildet. Der Lichtvorhang 1 weist weiterhin eine Empfängereinheit 5 auf, in deren Gehäuse eine Reihenanordnung von Lichtstrahlen 3 empfangenden Empfängern 6 in Form von Empfangsdioden vorgesehen ist. Die Empfangsdioden sind von Foto-PIN-Dioden oder Foto-Dioden gebildet. Alternativ können auch Foto-Transistoren eingesetzt werden.

Die Sendereinheit 2 und die Empfängereinheit 5 sind an gegenüberliegenden Rändern eines Überwachungsbereichs angeordnet. Bei freiem Überwachungsbereich treffen die von jeweils einem Sender 4 emittierten Lichtstrahlen 3 auf einen zugeordneten, gegenüberliegenden Empfänger 6. Ein Sender 4 und der hierzu zugeordnete Empfänger 6 bilden jeweils eine Strahlachse. Der Senderbetrieb wird durch eine Steuereinheit 7 in der Sendereinheit 2 gesteuert und bewertet. Der Empfängerbetrieb wird durch eine Auswerteeinheit 8 in der Empfängereinheit 5 gesteuert. Die Sender 4 und Empfänger 6 der einzelnen Strahlachsen werden durch eine optische Synchronisierung des Lichtvorhangs 1 zyklisch einzeln oder zu mehreren nacheinander aktiviert. Mit den parallel verlaufenden Lichtstrahlen 3 der Strahlachsen wird ein in einer Ebene verlaufendes Schutzfeld überwacht.

In der Auswerteeinheit 8 werden hierzu die Empfangssignale der Empfangsdioden ausgewertet, um als Objektfeststellungssignal ein binäres Schaltsignal zu erzeugen. Der erste Schaltzustand entspricht einer Objektmeldung, der zweite Schaltzustand einem freien Schutzfeld. Alternativ kann als Objektfeststellungssignal ein geometrische Kenngröße eines Objekts, wie z.B. eine Objektgröße oder Objektkontur ausgegeben werden.

Der Lichtvorhang 1 bildet einen Sicherheitssensor für den Einsatz im Bereich der Sicherheitstechnik. Hierzu weist der Lichtvorhang 1 einen fehlersicheren Aufbau auf. Insbesondere weist die Auswerteeinheit 8 einen mehrkanaligen, redundanten Aufbau auf, beispielsweise in Form zweier sich zyklisch überwachender Rechnereinheiten.

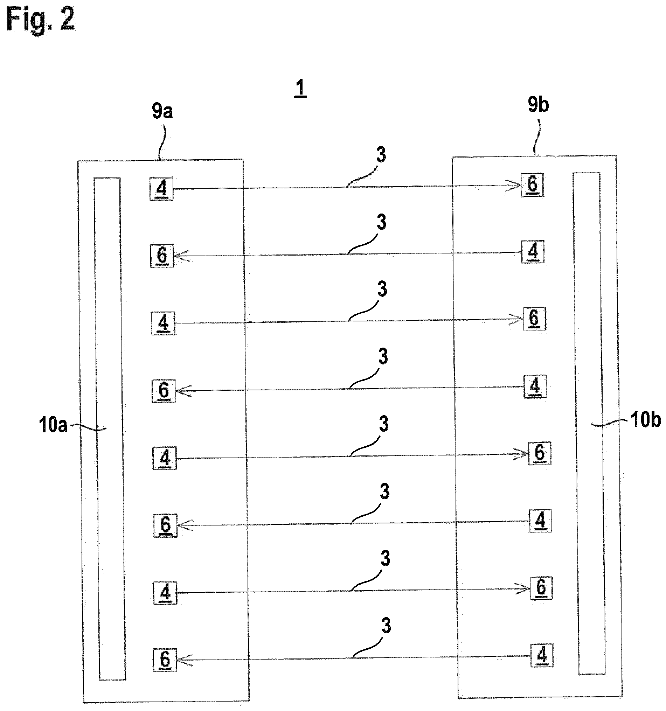

Figur 2 zeigt ein zweites Ausführungsbeispiel des erfindungsgemäßen Lichtvorhangs 1. In diesem Fall weist der Lichtvorhang 1 zwei Sender-Empfängereinheiten 9a, 9b auf, die jeweils in einem Gehäuse integriert sind. In jeder Sender-Empfängereinheit 9a, 9b befindet sich eine Reihenanordnung mit Sendern 4 und Empfängern 6, wobei im vorliegenden Fall jeweils eine alternierende Anordnung von Sendern 4 und Empfängern 6 vorhanden ist. In jeder Sender-Empfängereinheit 9a, 9b befindet sich eine Steuer- und Auswerteeinheit 10a, 10b, mittels derer die dort vorhandenen Sender 4 gesteuert werden und Empfangssignale der dort vorhandenen Empfänger 6 ausgewertet werden. Ansonsten entspricht der Lichtvorhang 1 gemäß Figur 2 dem Lichtvorhang 1 gemäß Figur 1.

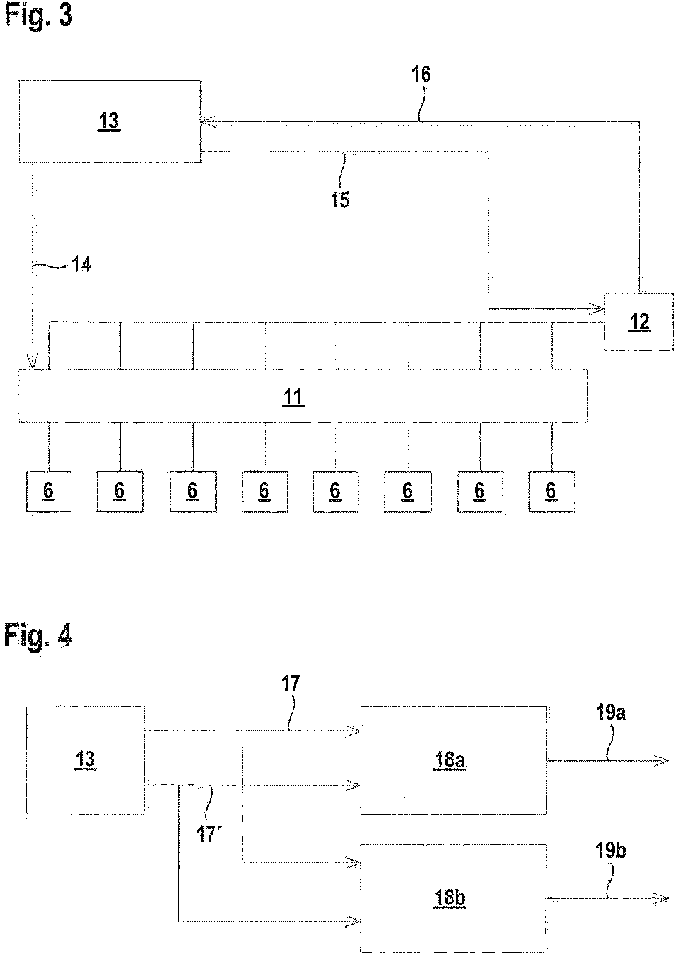

Figur 3 zeigt eine empfangsseitige Schaltungsanordnung für den Lichtvorhang 1 gemäß Figur 1. Eine weitgehend entsprechende Schaltungsanordnung ist auch für den Lichtvorhang 1 gemäß Figur 2 vorgesehen.

Die Schaltungsanordnung gemäß Figur 3 umfasst einen Multiplexer 11, an welchen ein Verstärker 12, der insbesondere einen Vorverstärker bildet, angeschlossen ist.

Die Empfänger 6 des Lichtvorhangs 1 bilden im vorliegenden Fall eine Kaskade. Dementsprechend sind alle Empfänger 6 an den Multiplexer 11 angeschlossen.

Weiterhin ist eine Kaskadensteuerung 13 vorhanden, die von einem Controller oder dergleichen gebildet ist. Von der Kaskadensteuerung 13 ist eine erste Steuerleitung 14 auf den Multiplexer 11 geführt. Über die Steuerleitung 14 werden Steuersignale von der Kaskadensteuerung 13 an den Multiplexer 11 gesendet. Weiterhin ist von der Kaskadensteuerung 13 eine zweite Steuerleitung 15 auf den Verstärker 12 geführt. Über die zweite Steuerleitung 15 werden von der Kaskadensteuerung 13 Steuersignale an den Verstärker 12 gesendet.

Vom Verstärker 12 führt eine Leitung 16 zur Kaskadensteuerung 13. Über die Leitung 16 werden die Verstärker 12, 12' verstärkte Empfangssignale der Empfänger 6 an die Kaskadensteuerung 13 gesendet.

Gemäß vorteilhaften Ausgestaltungen weist jeder Multiplexer 11, 11' eine Schiebekette oder ein Adressierwerk auf.

Das Adressierwerk weist generell Adressen zur Adressierung der Empfänger 6 und Verstärker 12 auf. Die Schiebekette weist eine Reihenanordnung von Schieberegisterelemente auf, wobei vorteilhaft jeweils einem Schieberegisterelement ein Empfänger 6 oder Verstärkung zu dessen Adressierung innerhalb der Schiebekette zugeordnet ist.

Das Adressierwerk kann in einer Rechnereinheit realisiert sein. Die Schiebekette kann aus einer Reihenanordnung von FlipFlops bestehen, wobei die FlipFlops die Schieberegisterelemente der Schiebekette ausbilden.

Durch das Steuersignal der Kaskadensteuerung 13, das über die Steuerleitung 14 dem Multiplexer 11 zugeführt wird, werden die Empfänger 6 zyklisch einzeln nacheinander aktiviert und dem Verstärker 12 zugeschaltet, wo die Empfangssignale dieses Empfängers 6 verstärkt werden. Prinzipiell könnte die Aktivierung von Empfängern 6 auch direkt über den Multiplexer 11 erfolgen.

Die verstärkten Empfangssignale werden von der Kaskadensteuerung 13 der Auswerteeinheit 8 zugeführt. Figur 4 zeigt hierfür ein Beispiel, das für alle Ausführungsbeispiele der Figuren 3, 5, 6 gültig ist.

Von der Kaskadensteuerung 13 werden die verstärkten Empfangssignale über Leitungen 17, 17' zweikanalig zwei CPUs 18a, 18b zugeführt, die die Auswerteeinheit 8 bilden. Abhängig von den verstärkten Empfangssignalen wird in den CPUs 18a, 18b das Objektfeststellungssignal generiert, das über eine zweikanalige Ausgangsstruktur, die von Ausgängen 19a, 19b der CPUs 18a, 18b gebildet ist, ausgegeben wird.

Die Funktionalität des Multiplexers 11 kann dadurch noch erweitert sein, dass mittels der Schiebekette oder mittels des Adressierwerks Anzeigemittel aktiviert werden.

Die Adressen des Adressierwerks oder Schieberegisterelements der Schiebekette sind dann dahingehend erweitert, dass mit diesen auch Anzeigemittel adressiert und dadurch aktiviert werden können.

Die Anzeigemittel können von Leuchtdioden oder alphanumerischen Anzeigen gebildet sein.

Gemäß einer weiteren vorteilhaften Ausgestaltung wird mittels der Schiebekette oder mittels des Adressierwerks der zugeordnete Verstärker 12 getestet.

Insbesondere werden zur Testung in der Schiebekette oder im Adressierwerk Testpulse generiert, dem Verstärker 12 zugeführt und von diesem rückgelesen. In der Schiebekette oder in dem Adressierwerk werden rückgelesene Testpulse mit einer Erwartungshaltung verglichen.

Als Erwartungshaltung können Sollwerte vorgegeben werden, die einem fehlerfreien Zustand entsprechen. Weichen die rückgelesenen Testpulse von den Sollwerten ab, kann eine Fehlermeldung generiert werden. Alternativ kann eine Sicherheitsfunktion ausgelöst werden. Insbesondere kann der Lichtvorhang 1 stillgesetzt werden.

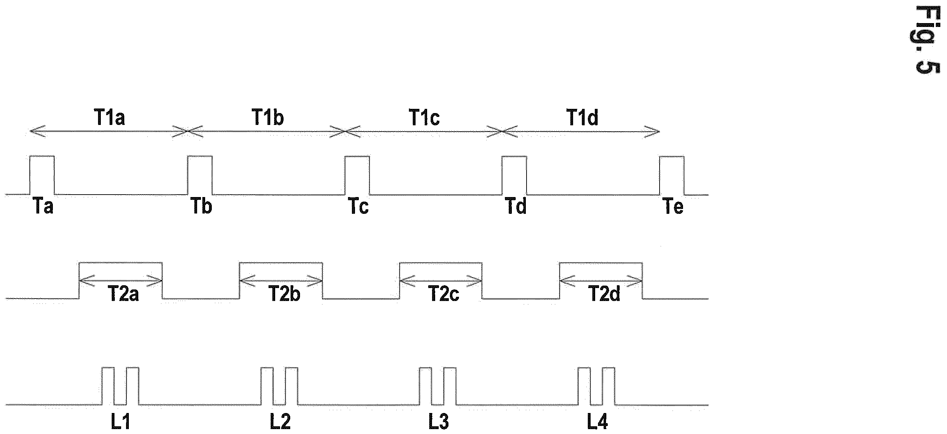

Figur 5 zeigt Zeitdiagramme für die erfindungsgemäße Aktivierung von Empfängern 6 und des Verstärkers 12 der Schaltungsanordnung gemäß Figur 3. Der Übersichtlichkeit halber sind dabei nur für vier Empfänger 6 Zeitdiagramme dargestellt.

Das obere Zeitdiagramm von Figur 5 zeigt die Aktivierungsintervalle T1a, T1b, T1c, T2d, innerhalb derer jeweils nur einer der Empfänger 6 aktiviert ist.

Zur Aktivierung eines Empfängers 6 generiert der Multiplexer 11 einen Umschaltpuls Ta, Tb, Tc, Td.

Erfindungsgemäß ist während der Umschaltvorgänge der Verstärker 12 deaktiviert. Der Verstärker 12 ist hierzu nur während der Aktivierungsintervalle T2a, T2b, T2c, T2d aktiviert, die außerhalb der Umschaltpulse Ta, Tb, Tc, Td liegen (Figur 5 mittleres Diagramm).

Die Aktivierungsintervalle T2a, T2b, T2c, T2d sind so dimensioniert, dass der Verstärker 12 aktiviert ist, wenn die Empfänger 6 Lichtstrahlen 3 in Form von Lichtimpulsen L1, L2, L3, L4 von den zugeordneten Sendern 4 empfangen (Figur 5 unteres Diagramm).

Da der Verstärker 12 während der Umschaltvorgänge der Empfänger 6 deaktiviert ist, werden keine Störungen bedingt durch die Umschaltvorgänge auf den Verstärker 12 übertragen.

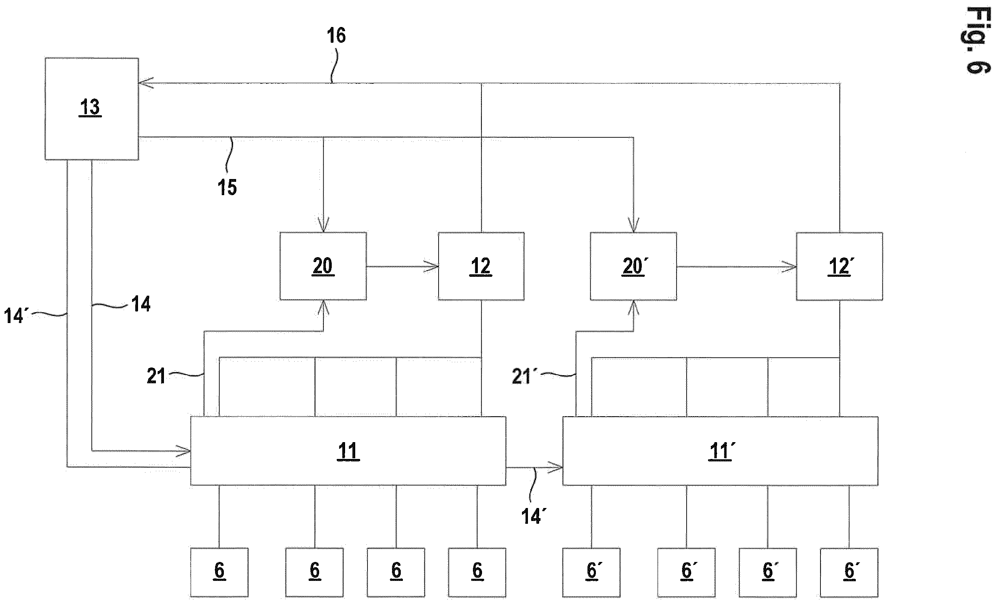

Figur 6 zeigt eine weitere empfangsseitige Schaltungsanordnung für den Lichtvorhang 1 gemäß Figur 1.

In diesem Fall sind zwei Kaskaden mit Empfängern 6, 6' vorgesehen. In einer ersten Kaskade sind Empfänger 6 auf einen ersten Multiplexer 11 mit einen ersten Verstärker 12 geführt. Dem ersten Verstärker 12 ist ein erstes Verstärker-Adressierwerk 20 zugeordnet, das über die Steuerleitung 15 von der Kaskadensteuerung 13 gesteuert wird.

Über eine Steuerleitung 21 steuert der erste Multiplexer 11 das erste Verstärker-Adressierwerk 20 an.

Entsprechend sind einer zweiten Kaskade Empfänger 6' auf einen zweiten Multiplexer 11' mit einem zweiten Verstärker 12' geführt. Dem zweiten Verstärker 12' ist ein zweites Verstärker-Adressierwerk 20' zugeordnet, das über die Steuerleitung 15 von der Kaskadensteuerung 13 gesteuert wird.

Über eine Steuerleitung 21' steuert der zweite Multiplexer 11' das zweite Verstärker-Adressierwerk 20' an.

Die Kaskadensteuerung 13 steuert den Betrieb beider Kaskaden über die Steuerleitungen 14, 14', die zu den Multiplexern 11, 11' geführt sind und über die Steuerleitung 15, die auf die Verstärker-Adressierwerke 20, 20' geführt sind.

Über die Steuerleitungen 14, 14' erfolgt eine Auswahl der zu aktivierenden Empfänger 6, 6', über die Steuerleitung 15 wird die Aktivierung der Verstärker 12, 12' gesteuert. Die Auswahl der Verstärker 12, 12' erfolgt über die Steuerleitungen 21, 21'. Über diese Steuerleitungen 21, 21' kann auch eine Testung des Verstärkers 12, 12' erfolgen.

Die in den Verstärkern 12, 12' verstärkten Empfangssignale werden über die Leitung 16 der Kaskadensteuerung 13 und dann der Auswerteeinheit 8 zugeführt.

Ansonsten entspricht die Funktionsweise der Schaltungsanordnung gemäß Figur 6 der Ausführungsform gemäß Figur 3, wobei insbesondere auch die Zeitdiagramme gemäß Figur 4 gültig sind.

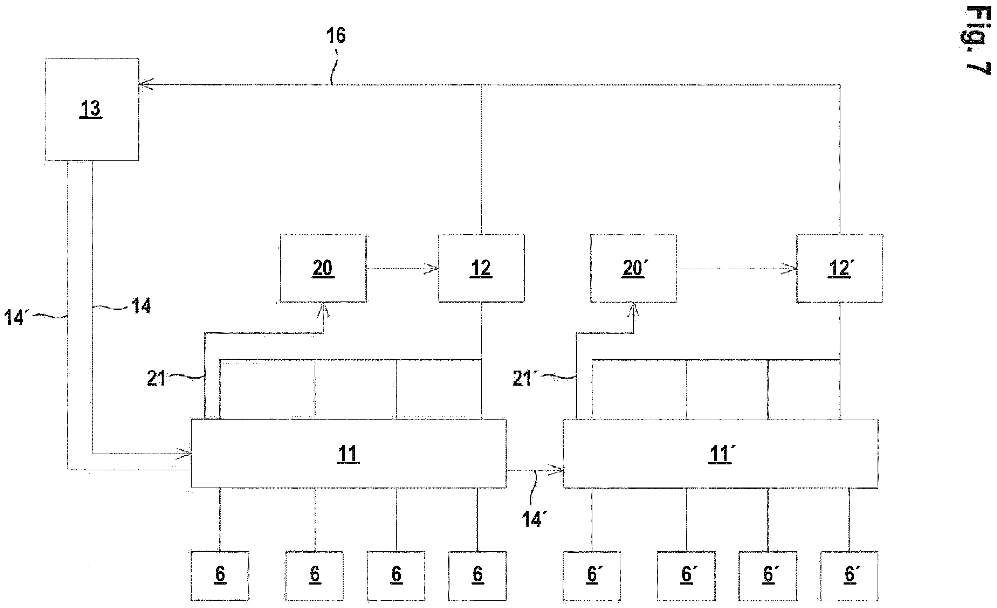

Figur 7 zeigt eine Variante der Ausführungsform gemäß Figur 6. Die Ausführungsform gemäß Figur 7 unterscheidet sich von der Ausführungsform gemäß Figur 6 nur dadurch, dass von der Kaskadensteuerung 13 keine Steuerleitung 15 zu den Verstärker-Adressierwerken 20, 20' geführt ist. Demzufolge übernehmen die Multiplexer 11, 11' über die Steuerleitungen 21, 21' die komplette Ansteuerung der Verstärker-Adressierwerke 20, 20'.

### Bezugszeichenliste

- (1): Lichtvorhang
- (2): Sendereinheit
- (3): Lichtstrahl
- (4): Sender
- (5): Empfängereinheit
- (6, 6'): Empfänger
- (7): Steuereinheit
- (8): Auswerteeinheit
- (9a, b): Sender-Empfängereinheit
- (10a, b): Steuer- und Auswerteeinheit
- (11, 11'): Multiplexer
- (12, 12'): Verstärker
- (13): Kaskadensteuerung
- (14, 14'): Steuerleitung
- (15): Steuerleitung
- (16): Leitung
- (17, 17'): Leitung
- (18a, b): CPU
- (19a, b): Ausgang
- (20, 20'): Verstärker-Adressierwerk
- (21, 21'): Steuerleitung

## Patentansprüche

1. Lichtvorhang (1) zur Erfassung von Objekten in einem Überwachungsbereich, mit einer Anordnung von Lichtstrahlen (3) emittierenden Sendern (4), mit einer Anordnung von Lichtstrahlen (3) empfangenden Empfängern (6, 6'), und mit einer Auswerteeinheit (8), in welcher in Abhängigkeit von Empfangssignalen der Empfänger (6, 6') ein Objektfeststellungssignal generiert wird, **dadurch gekennzeichnet, dass** die Empfänger (6, 6') wenigstens eine Kaskade ausbilden, und dass die Empfänger (6, 6') mittels eines Multiplexers (11, 11') einzeln nacheinander einem Verstärker (12, 12') zugeschaltet werden, wobei bei einer Aktivierung einer Zuschaltung eines Empfängers (6) der Verstärker (12, 12') deaktiviert ist.

2. Lichtvorhang (1) nach Anspruch 1, **dadurch gekennzeichnet, dass** bei einer Deaktivierung einer Zuschaltung eines Empfängers (6) der Verstärker (12, 12') deaktiviert ist.

3. Lichtvorhang (1) nach einem der Ansprüche 1 oder 2, **dadurch gekennzeichnet, dass** mehrere Kaskaden von Empfängern (6, 6') vorhanden sind, wobei die Empfänger (6, 6') jeder Kaskade mittels eines Multiplexers (11, 11') einem Verstärker (12, 12') zugeschaltet werden.

4. Lichtvorhang (1) nach einem der Ansprüche 1 bis 3, **dadurch gekennzeichnet, dass** eine Kaskadensteuerung (13) vorhanden ist, mittels derer die oder alle Multiplexer (11, 11') gesteuert werden.

5. Lichtvorhang (1) nach Anspruch 4, **dadurch gekennzeichnet, dass** die Kaskadensteuerung (13) Bestandteil einer Rechnerbaugruppe ist, welche die Auswerteeinheit (8) enthält, wobei die Rechnerbaugruppe als Auswerteeinheit (8) eine CPU oder zwei sich gegenseitig überwachende CPUs (18a, 18b) aufweist.

6. Lichtvorhang (1) nach einem der Ansprüche 1 bis 5, **dadurch gekennzeichnet, dass** jeder Multiplexer (11, 11') eine Schiebekette oder ein Adressierwerk aufweist.

7. Lichtvorhang (1) nach Anspruch 6, **dadurch gekennzeichnet, dass** die Aktivierung und Deaktivierung von Empfängern (6, 6') und/oder Verstärkern (12, 12') aus deren Schiebekette oder dem Adressierwerk abgeleitet wird.

8. Lichtvorhang (1) nach einem der Ansprüche 4 oder 5, **dadurch gekennzeichnet, dass** die Aktivierung und Deaktivierung von Empfängern (6, 6') und/oder Verstärkern (12, 12') mittels der Kaskadensteuerung (13) durchgeführt wird.

9. Lichtvorhang (1) nach einem der Ansprüche 6 bis 8, **dadurch gekennzeichnet, dass** mittels der Schiebekette oder mittels des Adressierwerks Anzeigemittel aktiviert werden, und/oder dass mittels der Schiebekette oder mittels des Adressierwerks der zugeordnete Verstärker (12, 12') getestet wird.

10. Lichtvorhang (1) nach Anspruch 9, **dadurch gekennzeichnet, dass** zur Testung in der Schiebekette oder im Adressierwerk Testpulse generiert werden, dem Verstärker (12, 12') zugeführt und von diesem rückgelesen werden, wobei in der Schiebekette oder in dem Adressierwerk rückgelesene Testpulse mit einer Erwartungshaltung verglichen werden.

11. Lichtvorhang (1) nach Anspruch 3, **dadurch gekennzeichnet, dass** jedem Verstärker (12, 12') ein Verstärker-Adressierwerk (20, 20') zugeordnet ist, welches vom zugeordneten Multiplexer (11, 11') angesteuert ist.

12. Lichtvorhang (1) nach Anspruch 11, **dadurch gekennzeichnet, dass** der Multiplexer (11, 11') das Verstärker-Adressierwerk (20, 20') zur Auswahl eines Verstärkers (12, 12') und/oder zur Testung eines Verstärkers (12, 12') ansteuert.

13. Lichtvorhang (1) nach einem der Ansprüche 4 und 11, **dadurch gekennzeichnet, dass** jedes Verstärker-Adressierwerk (20, 20') zur Aktivierung oder Deaktivierung des zugeordneten Verstärkers (12, 12') von der Kaskadensteuerung (13) angesteuert wird.

14. Lichtvorhang (1) nach einem der Ansprüche 1 bis 13, **dadurch gekennzeichnet, dass** das Objektfeststellungssignal ein binäres Schaltsignal ist, dessen Schaltzustände angeben, ob ein Objekt im Überwachungsbereich vorhanden ist oder nicht, oder dass das Objektfeststellungssignal eine geometrische Kenngröße eines erfassten Objekts enthält.

15. Lichtvorhang (1) nach einem der Ansprüche 1 bis 14, **dadurch gekennzeichnet, dass** dieser zwei an gegenüberliegenden Rändern des Überwachungsbereichs angeordnete Gehäuse aufweist, in welchen jeweils Sensorkomponenten vorhanden sind, wobei in einem ersten Gehäuse als Sensorkomponenten eine Reihenanordnung von Sendern (4) vorhanden ist und im zweiten Gehäuse eine Reihenanordnung von Empfängern (6, 6') vorhanden ist oder dass sowohl im ersten als auch im zweiten Gehäuse als Sensorkomponenten Sender (4) und Empfänger (6, 6') vorhanden sind, wobei in jedem Gehäuse eine alternierende Reihenanordnung von Sendern (4) und Empfängern (6, 6') vorhanden ist.
